(19) Europäisches Patentamt
European Patent Office
Office européen des brevets

(11) **EP 2 832 046 B1**

(12) **EUROPÄISCHE PATENTSCHRIFT**

(45) Veröffentlichungstag und Bekanntmachung des Hinweises auf die Patenterteilung:
**14.03.2018 Patentblatt 2018/11**

(21) Anmeldenummer: **13715925.7**

(22) Anmeldetag: **26.03.2013**

(51) Int Cl.:
***H04L 12/417*** *(2006.01)*

(86) Internationale Anmeldenummer:
**PCT/EP2013/056445**

(87) Internationale Veröffentlichungsnummer:
**WO 2013/144166 (03.10.2013 Gazette 2013/40)**

(54) **VERFAHREN UND VORRICHTUNG ZUR KOMMUNIKATION IN WINDPARKS**

METHOD AND APPARATUS FOR COMMUNICATING IN WIND FARMS

PROCÉDÉ ET DISPOSITIF DE COMMUNICATION DANS DES PARCS ÉOLIENS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.03.2012 DE 102012204944**

(43) Veröffentlichungstag der Anmeldung:
**04.02.2015 Patentblatt 2015/06**

(73) Patentinhaber: **Senvion GmbH**
**22297 Hamburg (DE)**

(72) Erfinder: **STILLE, Lars**
**24103 Kiel (DE)**

(74) Vertreter: **Glawe, Delfs, Moll**
**Partnerschaft mbB**
**von Patent- und Rechtsanwälten**
**Postfach 13 03 91**
**20103 Hamburg (DE)**

(56) Entgegenhaltungen:
**EP-A1- 2 393 248    WO-A1-2005/119951**

**Beschreibung**

Die Erfindung betrifft ein Verfahren zur Kommunikation zwischen Anlagen in einem Windpark sowie eine zur Durchführung des erfindungsgemäßen Verfahrens geeignete Anlage.

Windparks umfassen in der Regel mehrere Windenergieanlagen, wobei die in den Windenergieanlagen erzeugte Leistung über ein windparkinternes Netz in ein öffentliches Versorgungsnetz eingespeist wird. Um die Qualität des von dem Windpark in das Versorgungsnetz eingespeiste Leistung zu überprüfen und ggf. anzupassen, ist häufig auch noch ein sogenannter Parkmaster vorgesehen, der den einzelnen Windenergieanlagen im Windpark Steuerungsvorgaben senden kann. Außerdem kann ein Windpark noch zusätzliche Anlagen umfassen, die zusätzliche, zur Steuerung der Windenergieanlagen hilfreiche Informationen liefern können, wie bspw. separate Windmessstationen.

Alle Anlagen in einem Windpark (Windenergieanlagen, Parkmaster, Windmessstationen, etc.) sind an ein Kommunikationsnetz angeschlossen. Über dieses Kommunikationsnetz können Informationen gesendet werden, die dann von einem Empfänger verarbeitet und bspw. in die Steuerung einer oder mehrerer Windenergieanlagen einfließen können. Das Dokument EP 2 393 248 A1 offenbart ein Datenübertragungsprotokoll, welches speziell für die Kommunikation in einem Windpark angepasst ist.

Im Stand der Technik ist es bekannt, dass alle Anlagen (ausgenommen dem Parkmaster) ihre Informationen an den Parkmaster senden, der diese ggf. zwischenverarbeitet und anschließend an die Anlagen, für die diese Informationen relevant sind, weiterleitet. Es ist auch möglich, dass der Parkmaster alle Informationen unabhängig von der Relevanz der Informationen für einzelne Anlagen an alle am Kommunikationsnetz des Windparks angeschlossenen Anlagen sendet. Man spricht in diesem Fall von einem "Broadcast". Ist in diesem Fall eine empfangene Information für einzelne Anlagen irrelevant, wird sie stillschweigend von diesen verworfen.

Indem die Informationen grundsätzlich über den Parkmaster laufen, muss dieser ausreichend ausgelegt sein, um alle im Windpark versendeten Informationen verarbeiten können.

Im Stand der Technik sind weiterhin Kommunikationsverfahren mit mehreren, an ein Kommunikationsnetz angeschlossenen Teilnehmereinheiten bekannt, bei denen die Teilnehmereinheiten nach dem Prinzip des "time division multiple access" (TDMA) Datenpakete über das Kommunikationsnetz senden. Ein entsprechendes Kommunikationsverfahren ist beispielsweise aus der DE 10 2005 020 733 A1 bekannt.

Für ein TDMA-Kommunikationsverfahren ist es erforderlich, dass die Teilnehmereinheiten nur zu ihnen zugewiesenen Zeitpunkten Daten über das Kommunikationsnetz senden. Um dies sicherzustellen, ist es u. a. erforderlich, dass alle Teilnehmereinheiten die ihnen jeweils zugewiesenen Zeitpunkte ausgehend von derselben Zeitbasis berechnen. In anderen Worten müssen die Teilnehmereinheiten synchronisiert werden.

In der Patentanmeldung US 2008/0198868 ist ein Verfahren beschrieben, bei dem die einzelnen Teilnehmereinheiten anhand von einer speziellen Synchronisierungseinheit ("time master") gesendeten Synchronisationsnachricht ("reference message including a time information") synchronisiert werden. Für den Fall, dass die primäre Synchronisierungseinrichtung ausfällt, sind gesonderte redundante Synchronisierungseinheiten ("reserve time master(s)") vorgesehen, die bei Bedarf Synchronisationsnachrichten an die Teilnehmereinheiten senden. Nachteilig an diesem Stand der Technik ist, dass gesonderte Synchronisationseinheiten vorgesehen oder Teilnehmereinheiten speziell für die Funktion einer Synchronisationseinheit ausgebildet sein müssen. Außerdem ist bei diesem Stand der Technik eine explizite Synchronisationsnachricht erforderlich, die keine oder nur in vermindertem Umfang Nutzdaten enthalten kann.

Der Erfindung liegt die Aufgabe zugrunde, ein Verfahren sowie zur Durchführung des Verfahrens geeignete Anlagen zu schaffen, bei denen die Nachteile aus dem Stand der Technik nicht oder nur in verringertem Maße auftreten.

Diese Aufgabe wird gelöst durch das Verfahren gemäß dem Hauptanspruch, sowie eine Anlage gemäß dem nebengeordneten Anspruch. Vorteilhafte Weiterbildungen ergeben sich aus den abhängigen Ansprüchen.

Demnach betrifft die Erfindung ein Verfahren zur Kommunikation zwischen in einer Reihenfolge gemäß einem sortierfähigen Merkmal geordneten Anlagen in einem Windpark, bei dem von einer Anlage in Form einer Nachricht gesendete Informationen von allen anderen Anlagen in dem Windpark empfangen werden, wobei ein zyklisch wiederkehrendes, zeitliches Sendeintervall eingerichtet ist und jeder Anlage in Abhängigkeit von ihrer Position in der Reihenfolge ein Zeitpunkt in dem Sendeintervall zugeordnet ist, zu dem sie eine Nachricht senden darf, wobei ausgehend von der einer ersten Position in der Reihenfolge Zeitpunkte von Beginn des Sendeintervalls an entsprechend der Position in der Reihenfolge geordnet sind und wobei der Beginn des Sendeintervalls bei allen Anlagen anhand einer von der Anlage an der ersten Position in der Reihenfolge ausgesendeten Nachricht synchronisiert wird und wobei jede Anlage anhand aller von den anderen Anlagen erhaltenen Nachrichten selbstständig die Anlage an der ersten Position der Reihenfolge bestimmt und jede Anlage (2) überprüft, ob sie selbst die Anlage (2) an der ersten Position in der Reihenfolge ist, und, wenn ja, nach Ablauf eines Sendeintervalls (12) eine Nachricht versendet.

Die Erfindung betrifft weiterhin eine Anlage zur Durchführung des erfindungsgemäßen Verfahrens umfassend eine Kommunikationseinheit mit einem Empfangsmodul, einem Sendemodul und einem Synchronisationsmodul, wobei das Synchronisationsmodul dazu ausgebildet ist, die Position in der Reihenfolge aus den von dem Empfangsmodul empfangenen Nachrichten anderer Anlagen auszulesen und anhand einer abgespeicherten Position in der Reihenfolge zu ermitteln, ob die Anlage die Anlage an der ersten Position in der Reihenfolge ist, und, wenn ja, nach Ablauf eines Sendeintervalls das Sendemodul anzuweisen, eine Nachricht zu versenden, wenn nein, den Empfang einer Nachricht von der Anlage an der ersten Position in der Reihenfolge abzuwarten, ausgehend vom Zeitpunkt des Empfangs einer Nachricht von der Anlage an der ersten Position in der Reihenfolge einen Zeitpunkt gemäß der eingespeicherten Position in der Reihenfolge zu bestimmen und zu dem Zeitpunkt das Sendemodul anzuweisen, eine Nachricht zu versenden, und wobei das Synchronisationsmodul (35) dazu ausgebildet ist, anhand aller von den anderen Anlagen erhaltenen Nachrichten selbstständig die Anlage an der ersten Position der Reihenfolge zu bestimmen. In der Nachricht können beliebige Informationen von anderen Komponenten der Anlage enthalten sein.

Der Begriff "Anlagen" steht für funktionelle Einheiten in einem Windpark, die neben ihrer eigentlichen Aufgabe, wie bspw. die Stromerzeugung, noch an das windparkinterne Kommunikationsnetz angeschlossen sind und zum Senden, Empfangen und/oder zur Verarbeitung von Informationen und Nachrichten über dieses Kommunikationsnetz ausgebildet sind. Bei den Anlagen kann es sich bspw. um Windenergieanlagen, Windmessstationen oder den Parkmaster handeln, die jeweils über Kommunikationsmittel zum Senden und Empfangen von Informationen und Nachrichten über das windparkinterne Kommunikationsnetz verfügen.

Bei der "Reihenfolge", in der die Anlagen geordnet sind, handelt es sich in Zusammenhang mit dieser Erfindung um eine Ordnung der Anlagen für Kommunikationszwecke, die auf beliebigen, sortierfähigen Merkmalen basieren kann. Weist jede Anlage ein entsprechendes Merkmal auf, kann anhand dieses Merkmals jeder Anlage eine eindeutige Reihenfolge der Anlagen für die Kommunikation untereinander festgelegt werden. Bspw. kann jede Anlage eine jeweils eindeutige Anlagennummer aufweisen. Die Anlagen können dann anhand der Anlagennummer in einer Reihenfolge entsprechenden aufsteigender Anlagennummern geordnet werden. Die Anlage mit der kleinsten Anlagennummer ist dann an erster Position der Reihenfolge, die Anlage mit der nächsthöheren Anlagennummer an der zweiten Position, usw. Die Anlage mit der höchsten Anlagennummer ist am Ende der Reihenfolge eingeordnet. Es ist selbstverständlich auch möglich, die Anlagen ausgehend von der höchsten Anlagennummer nach absteigenden Anlagennummern zu ordnen. Weiterhin ist es möglich, andere sortierfähige Merkmale außer der Anlagennummer zur Bildung einer Reihenfolge zu verwenden.

Die gewählte Ordnung bzw. die daraus resultierende Reihenfolge kann die tatsächliche räumliche Anordnung der Anlagen im Windpark widerspiegeln. Dies ist aber nicht zwingend notwendig.

Gemäß der Erfindung ist vorgesehen, dass alle Anlagen in einem Windpark ihre Informationen an alle anderen Anlagen im Windpark senden. Dies gilt unabhängig davon, für welche Anlagen die gesendeten Informationen relevant sind oder sein könnten. Jede Anlage versendet ihre Informationen also in Form einer Nachricht per "Broadcast".

Die Verarbeitungskapazität der Empfänger der einzelnen Anlagen im Windpark zum Empfang von Nachrichten ist häufig begrenzt. In der Regel weisen Empfänger einen Eingangspuffer für eine vorgegebene Anzahl von Nachrichten auf, die in einer bestimmten Verarbeitungszeit vollständig verarbeitet werden können. Sofern die Anzahl der an das Kommunikationsnetz eines Windparks angeschlossenen Anlagen eine bestimmte Zahl überschreitet und diese beliebig Nachrichten senden würden, käme es regelmäßig zu einem Überlauf der Eingangspuffer, da die eingehenden Nachrichten nicht ausreichend schnell verarbeitet werden könnten.

Erfindungsgemäß ist daher vorgesehen, dass die einzelnen Anlagen in einem Windpark nur an bestimmten Zeitpunkten in einem Sendeintervall Nachrichten senden dürfen. Dadurch wird erreicht, dass die Anzahl der in einem bestimmten Zeitabschnitt gesendeten Nachrichten begrenzt wird, womit auch die Anzahl der an jeder Anlage in einem Zeitabschnitt empfangenen und zu verarbeitenden Nachrichten begrenzt ist. Ein Überlauf des Eingangspuffers der Anlagen kann somit verhindert werden. Das Sendeintervall wiederholt sich zyklisch, sodass die einzelnen Anlagen regelmäßig zu bestimmten Zeitpunkten Nachrichten senden dürfen.

Damit die einzelnen Anlagen ihre Nachrichten auch wirklich nur an dem für sie vorgesehenen Zeitpunkt innerhalb eines Sendeintervalls senden, muss ihnen nicht nur der Zeitpunkt in Relation zum Sendeintervall bekannt sein. Zusätzlich muss auch sichergestellt werden, dass das Sendeintervall an jeder Anlage synchronisiert ist. "Synchronisiert" bedeutet in diesem Zusammenhang, dass das von einer Anlage angenommene Sendeintervall bei jeder Anlage (wenigstens nahezu) gleichzeitig beginnt und (wenigstens nahezu) gleichzeitig endet. Wären die Sendeintervalle bei den Anlagen nicht synchronisiert, könnte es vorkommen, dass zwei Anlagen gleichzeitig Nachrichten senden, obwohl ihnen eigentlich unterschiedliche Zeitpunkte im Sendeintervall zum Senden von Nachrichten zugeordnet sind.

Die Synchronisation erfolgt erfindungsgemäß anhand einer Nachricht der Anlage an der ersten Position in der Reihenfolge. Sofern eine Anlage also eine Nachricht der Anlage an der ersten Position in der Reihenfolge erhält, wird der Erhalt der Nachricht gleichzeitig als Beginn des Sendeintervalls gewertet, davon ausgehend der Zeitpunkt zum Senden eigener Nachrichten anhand der Position in der Reihenfolge bestimmt und eine eigene Nachricht zu dem berechneten Zeitpunkt gesendet. Ob eine Nachricht von der Anlage an der ersten Position in der Reihenfolge stammt, kann bspw. am Absenderfeld einer Nachricht abgelesen werden, das grundsätzlich Informationen über die Anlage, bspw. die Position in der Reihenfolge oder die Anlagennummer der Absenderanlage, enthalten kann.

Bei dem erfindungsgemäßen Verfahren erfolgt die Synchronisation also nicht anhand einer besonderen Synchronisationsnachricht - wie noch im Stand der Technik - sondern auf Basis der von den einzelnen Anlagen an alle anderen Anlagen im Windpark gesendeten Nachrichten. Indem eine Anlage alle Nachrichten der anderen Anlagen im Windpark erhält, kann diese eine Anlage selbstständig die Anlage an der ersten Position der Reihenfolge bestimmen. Ausgehend von einer Nachricht der Anlage an der ersten Position der Reihenfolge kann die eine Anlage wiederum den Zeitpunkt, an dem sie eine Nachricht senden darf, ermitteln. Dies bietet den Vorteil, dass weder besondere Synchronisationsnachrichten, die grundsätzlich zulasten der Nutzdatenrate gehen, noch besonders ausgebildete Synchronisationseinheiten vorgesehen sein müssen. Auch ist die Ausfallsicherheit des Systems sehr hoch, da das Redundanzlevel für die Synchronisation der Anlagen im Windpark praktisch der Anzahl dieser Anlagen entspricht.

Die erfindungsgemäße Zuteilung von Zeitpunkten zum Senden von Nachrichten innerhalb eines Sendeintervalls bietet auch dann eine gute Robustheit, wenn einzelne Anlagen in einem Sendeintervall keine Nachrichten senden. Eine gemäß der Position in der Reihenfolge nachfolgende Anlage sendet ihre Nachrichten nämlich unabhängig davon, ob die gemäß der Position in der Reihenfolge vorhergehende Anlage Nachrichten gesendet hat.

Es ist dennoch grundsätzlich bevorzugt, wenn die Anlagen zu den für sie vorgesehenen Zeitpunkten grundsätzlich Nachrichten senden, auch wenn diese ggf. keine oder keine relevanten Informationen enthalten. Wird grundsätzlich davon ausgegangen, dass jede Anlage in jedem Sendeintervall eine Nachricht zu dem ihr zugeordneten Zeitpunkt sendet, kann festgestellt werden, ob die Kommunikation einer Anlage gestört ist.

Die Anlage an der ersten Position in der Reihenfolge erfordert besondere Aufmerksamkeit, da ihre Nachricht erfindungsgemäß zur Synchronisation des Sendeintervalls bei den übrigen Anlagen benötigt wird. Diese besondere Aufmerksamkeit spiegelt sich jedoch nicht in einer besonderen strukturellen oder funktionellen Ausgestaltung dieser Anlage an der ersten Position in der Reihenfolge wieder, sondern bezieht sich vielmehr auf die besondere Behandlung der Nachrichten dieser Anlage durch die anderen Anlagen zur Synchronisation. Es können verschiedene Ausgestaltungen des erfindungsgemäßen Verfahrens alternativ oder kumulativ vorgesehen sein, um ein wenigstens zeitweises Ausbleiben von Nachrichten von der Anlage an der ersten Position in der Reihenfolge zu tolerieren.

Es ist bevorzugt, wenn nach zwei Sendeintervallen, in denen Nachrichten von der Anlage an der ersten Position in der Reihenfolge ausbleiben, die Anlage an der nächst höheren Position in der Reihenfolge die Anlage an der ersten Position in der Reihenfolge wird. Die Referenz, anhand derer die Sendeintervalle der einzelnen Anlagen synchronisiert werden, wird durch diese Maßnahme verändert, wenn die Anlage an der an sich ersten Position in der Reihenfolge keine Nachrichten mehr sendet oder entsprechende Nachrichten zumindest ausbleiben, bspw. aufgrund eines Defektes. Die Synchronisation der einzelnen Anlagen wird dadurch innerhalb von kurzer Zeit, nämlich spätestens nach zwei Sendeintervallen, wiederhergestellt. Sollte die Anlage an der ursprünglich ersten Position in der Reihenfolge wieder reaktiviert werden und erneut Nachrichten senden, weil bspw. der Defekt behoben wurde, kann diese Anlage wieder als Anlage an der ersten Position in der Reihenfolge eingesetzt werden. Die Synchronisation der einzelnen Anlagen erfolgt dann wieder anhand der Nachrichten dieser Anlage.

Alternativ oder zusätzlich ist es möglich, dass die einzelnen Anlagen unabhängig von einer erfolgten Synchronisation und dem daraus berechneten Zeitpunkt für das Senden einer Nachricht oder nur bei Ausbleiben einer Nachricht von der Anlage an der ersten Position in der Reihenfolge eine Nachricht versenden, wenn eine Zeitspanne entsprechend einem vollständigem Sendeintervall seit dem letzten Senden einer eigenen Nachricht vergangen ist. Senden die Anlagen in einem ersten Sendeintervall ihre Nachrichten der Reihe nach zu bestimmten Zeitpunkten, so wird diese Reihung und die zeitlichen Abstände zwischen den einzelnen Nachrichten grundsätzlich auch eingehalten, wenn jede Anlage ihre nächste Nachricht nach einer für jede Anlage identischen Zeitspanne entsprechend dem Sendeintervall ab der letzten von ihr jeweils gesendeten Nachricht sendet. Zumindest für eine gewisse Anzahl von Sendeintervallen ist es so möglich, dass einzelne Anlagen Nachrichten weiterhin der Reihe gemäß ihrer Position in der Reihenfolge nach senden, ohne dass sich das Senden von Nachrichten verschiedener Anlagen überschneidet. Aufgrund unvermeidbarer Ungenauigkeiten bei der Bestimmung des Sendeintervalls und/oder der Zeitpunkte zum Senden von Nachrichten bei den einzelnen Anlagen ist dies in der Regel aber nicht auf Dauer gewährleistet. Dennoch kann eine geordnete Kommunikation der Anlagen für eine gewisse Zeit aufrechterhalten werden, bis die Anlage an der ersten Position in der Reihenfolge bspw. nach einem Neustart wieder verfügbar ist und Nachrichten sendet.

Es ist bevorzugt, wenn der Abstand zwischen zwei benachbarten Zeitpunkten im Sendeintervall, an denen Anlagen Nachrichten senden, so gewählt wird, dass ein Überlauf der Empfangspuffer für Nachrichten bei den Anlagen vermieden wird. Es kann so sichergestellt werden, dass die Anzahl der an jede Anlage geschickten Nachrichten in einem bestimmten Zeitintervall die Anzahl der von den einzelnen Anlagen innerhalb des Zeitintervalls maximal verarbeitbaren Nachrichten nicht übersteigt. Es kann darüber hinaus ein Sicherheitsfaktor vorgesehen sein, sodass auch bei kurzzeitiger Fehlfunktion einer Anlage beim Verarbeiten der Nachrichten in ihrem Eingangspuffer dieser nicht überläuft. Außerdem kann vorgesehen sein, dass bestimmte Anlagen, bspw. der Parkmaster, zu jedem Zeitpunkt Nachrichten an alle oder einzelne Anlagen im Windpark senden dürfen, ohne dass die Gefahr eines Überlaufs eines Eingangspuffers bei einer oder allen anderen Anlagen besteht. Auch Nachrichten von Anlagen, die Nachrichten nicht synchronisiert senden, sollten regelmäßig nicht zu einem Überlauf der Eingangspuffer führen. Um dies zu erreichen, kann die Anzahl der regelmäßig in einem Zeitintervall versendeten Nachrichten geringer gewählt werden als maximal möglich. So entsteht ein ausreichender Puffer für zusätzliche Nachrichten.

Die Länge des Zeitintervalls, welches eine Anlage benötigt, um alle Nachrichten im Eingangspuffer zu verarbeiten, wird als Verarbeitungszeit bezeichnet. Ist festgelegt, wie viele Nachrichten regelmäßig in dieser Verarbeitungszeit von anderen Anlagen eingehen dürfen, um ausreichende Funktionssicherheit auch bei kurzzeitigen Ausfällen oder Empfang von Nachrichten von besonderen Anlagen, bspw. dem Parkmaster oder nicht synchronisierten Anlagen zu jedem Zeitpunkt gesichert ist, kann der Zeitpunkt, zu dem eine Anlage eine Nachricht sendet nach der Formel

$$Zeitpunkt = \frac{Verarbeitungszeit}{Anzahl\ der\ erlaubten\ Nachrichten} \times Position\ in\ der\ Reihenfolge$$

berechnet werden. Der so bestimmte Zeitpunkt bezieht sich dabei auf den Beginn eines jeden Sendeintervalls.

Es ist bevorzugt, dass zwischen dem Zeitpunkt, an dem die Anlage an der letzten Position in der Reihenfolge im Sendeintervall eine Nachricht sendet und dem Ende des Sendeintervalls ein Zeitpuffer vorgesehen ist, d.h. zwischen dem genannten letzten Zeitpunkt und dem Anfang des nächsten Sendeintervalls ist eine gewisse Zeitspanne vorgesehen, in der kein Senden von Nachrichten vorgesehen ist. Durch den Zeitpuffer kann sichergestellt werden, dass Ungenauigkeiten in der Synchronisation oder kleine Fehlfunktionen der Anlagen nicht dazu führen, dass Nachrichten aus einem Sendeintervall in dem darauffolgenden Sendeintervall gesendet werden.

Die erfindungsgemäße Anlage ist dazu geeignet, an ein windparkinternes Kommunikationsnetz angeschlossen zu werden, in welchem nach dem erfindungsgemäßen Verfahren kommuniziert wird. Es wird daher auf die vorstehenden Ausführungen verwiesen.

Bevorzugt ist es, wenn die Anlage dazu ausgebildet ist, nach Versand der ersten Nachricht unabhängig von dem Erhalt eine Nachricht der Anlage an der ersten Position in der Reihenfolge nach Ablauf einer Zeitspanne entsprechend einem Sendeintervall eine zweite Nachricht zu senden. Dazu kann das Synchronisationsmodul dazu ausgebildet sein, nach Ablauf einer Zeitspanne, die einem Sendeintervall entspricht, ab dem Versenden einer Nachricht das Sendemodul anzuweisen, eine Nachricht zu versenden.

Es ist bevorzugt, wenn die Anlage eine Windenergieanlage, eine Windmessstation, eine Transformatorstation oder ein Parkmaster ist.

Weitere vorteilhafte Ausgestaltungen der erfindungsgemäßen Anlage ergeben sich aus der obigen Beschreibung des Verfahrens.

Die Erfindung wird nun anhand von Ausführungsbeispielen unter Bezugnahme auf die beigefügten Zeichnungen beispielhaft erläutert. Es zeigen:

Figur 1    einen Windpark, bei dem die Anlagen nach dem erfindungsgemäßen Verfahren kommunizieren;

Figur 2    einen schematischen Ablauf der Kommunikation im Kommunikationsnetz des Windparks aus Figur 1;

Figur 3    eine schematische Darstellung einer erfindungsgemäßen Anlage;

Figur 4    eine schematische Darstellung des Verhaltens der Anlage aus Figur 3; und

Figur 5    eine schematische Darstellung eines alternativen Verhaltens der Anlage aus Figur 3.

Bei allen Ausführungsbeispielen wird aus Gründen der Übersichtlichkeit angenommen, dass die Reihenfolge der einzelnen Anlagen anhand einer Anlagennummer in aufsteigender Sortierung gebildet wird. Bei der Anlagennummer handelt es sich um ein sortierfähiges Merkmal einer jeden Anlage. Die Anlage mit der kleinsten Anlagennummer nimmt die erste Position in der Reihenfolge ein, die Anlage mit der nächst höheren Anlagennummer die zweite Position, usw. Anstelle der Anlagennummer kann aber auch jedes andere beliebige sortierfähige Merkmal verwendet werden. Ebenso ist auch eine umgekehrte Sortierung, d.h. eine absteigende Sortierung ausgehend von dem höchsten Merkmal bzw. der höchsten Anlagennummer, möglich.

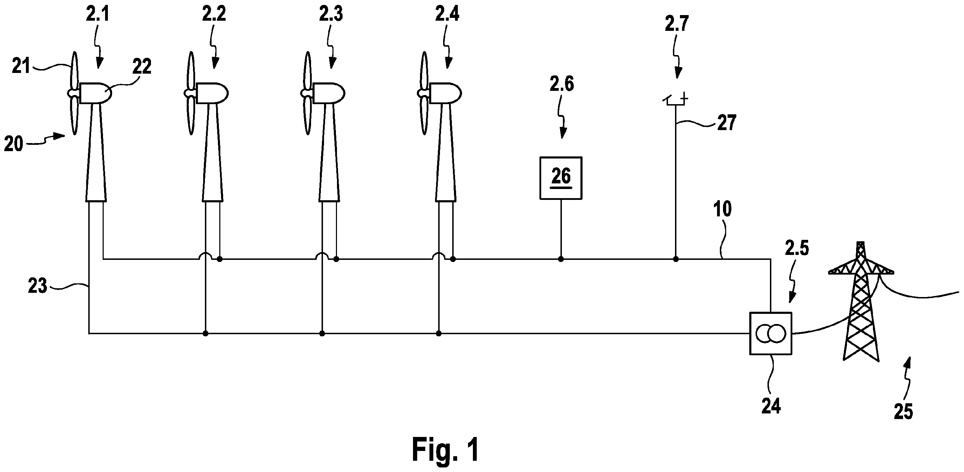

In Figur 1 ist ein Windpark 1 mit einer Vielzahl von Anlagen 2 dargestellt. Die Anlagen 2 weisen alle eine Anlagennummer 1 bis 7 auf, die aus Übersichtlichkeitsgründen als Suffix zu den Bezugszeichen dargestellt sind.

Bei den Anlagen 2.1 bis 2.4 handelt es sich um Windenergieanlagen 20, bei denen über einen Rotor mit Rotorblättern 21 Wind in mechanische Energie umgewandelt wird. Diese mechanische Energie wird jeweils über einen Generator in der Gondel 22 einer Windenergieanlage 20 in elektrische Energie umgewandelt und in ein windparkinternes Stromnetz 23 eingespeist. Als weitere Anlage 2.5 ist am windparkinternen Stromnetz 23 eine Transformatorstation 24 angeschlossen, mit der die in das windparkinterne Stromnetz eingespeiste Leistung so transformiert wird, dass sie in ein Versorgungsnetz 25 eingespeist werden kann.

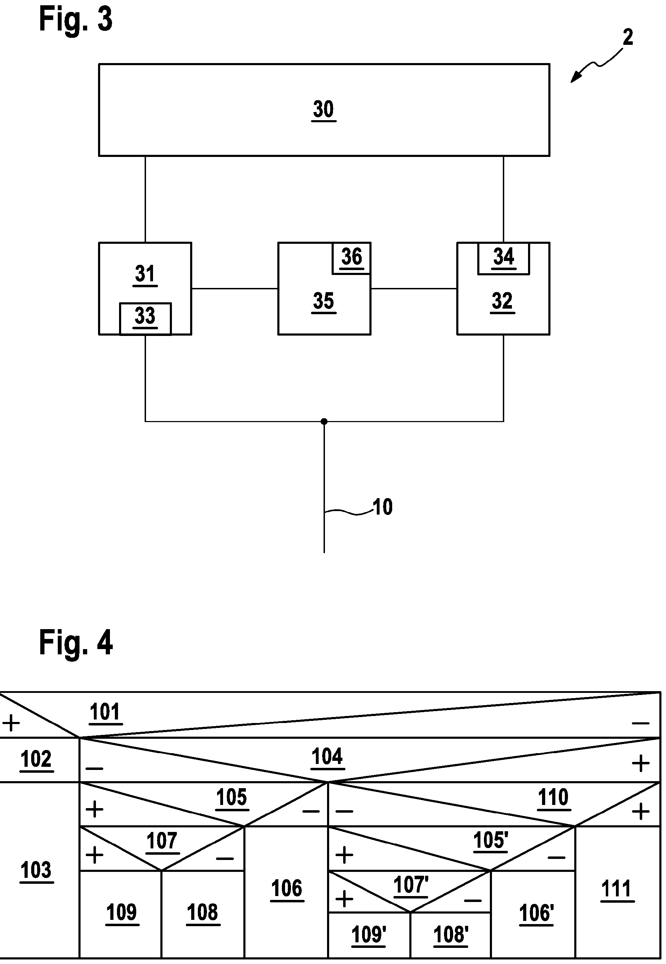

Sowohl die Windenergieanlagen 20 bzw. Anlagen 2.1 bis 2.4 als auch die Transformatorstation 24 bzw. Anlage 2.5 sind darüber hinaus noch an ein windparkinternes Kommunikationsnetz 10 angeschlossen. Weiterhin sind als Anlage 2.6 noch ein Parkmaster 26 sowie als Anlage 2.7 eine Windmessstation 27 an das Kommunikationsnetz 10 angeschlossen. Die zum Anschluss an das Kommunikationsnetz 10 erforderlichen Komponenten sind aus Übersichtlichkeitsgründen in Figur 1 nicht dargestellt, können aber bei jeder Anlage 2.1 bis 2.7 bspw. wie in Figur 3 dargestellt, ausgebildet sein.

Die einzelnen Anlagen 2.1 bis 2.7 tauschen untereinander Informationen aus, um einen möglichst optimalen Betrieb des gesamten Windparks 1 sicherzustellen. So können bspw. Informationen von der Transformatorstation 24 bzw. Anlage 2.5 betreffend Phasenlage und Spannung im Versorgungsnetz 25 bei der Steuerung der einzelnen Windenergieanlagen 20 bzw. Anlagen 2.1 bis 2.4 berücksichtigt werden, um so vorgegebenen Anforderungen an die Qualität der in das Versorgungsnetz 25 eingespeisten Leistung hinsichtlich des Wirk- und/oder Blindleistungsanteils gerecht zu werden. Der Parkmaster 26 bzw. Anlage 2.6 kann ebenfalls auf die Steuerung der einzelnen Windenergieanlagen 20 bzw. Anlagen 2.1 bis 2.4 Einfluss nehmen. Die Informationen des Windmessers 27 bzw. Anlage 2.7 können dabei berücksichtigt werden.

Es ist vorgesehen, dass alle Anlagen 2.1 bis 2.7 die von ihnen gewonnenen und für die anderen Anlagen ggf. benötigten oder berücksichtigbaren Informationen per Net-Broadcast an alle anderen Anlagen 2.1 bis 2.7 im Kommunikationsnetz 10 in Form von Nachrichten senden. Dabei ist unerheblich, ob das Kommunikationsnetz 10 ggf. in Subnetze unterteilt ist. Im Fall von Subnetzen werden alle Nachrichten an alle Subnetze verteilt.

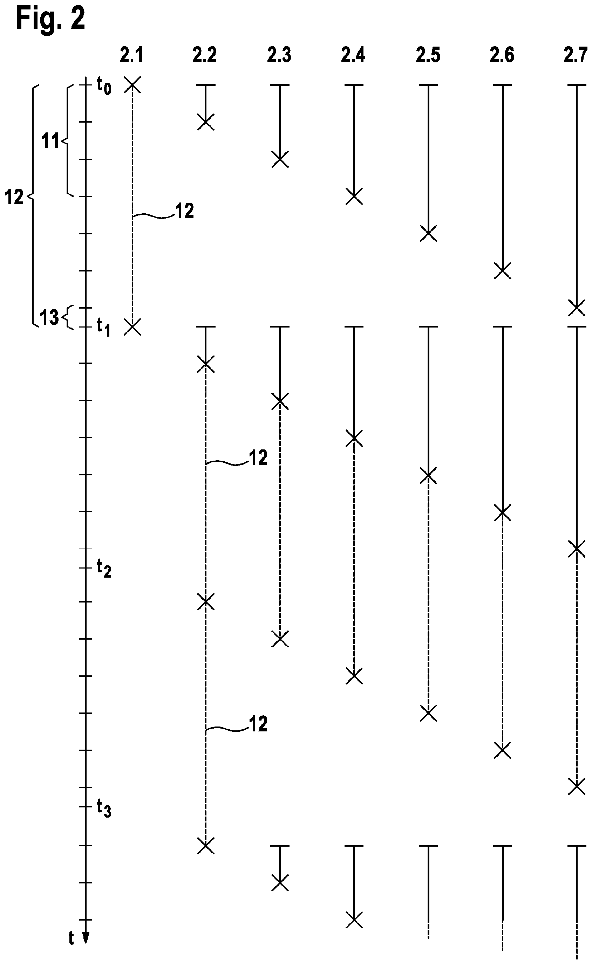

In Figur 2 ist schematisch dargestellt, wie die Kommunikation im Kommunikationsnetz 10 (per netdirected Broadcast) zeitlich abläuft. Dabei ist das Versenden einer Nachricht von einer der Anlagen 2.1 bis 2.7 jeweils mit einem Kreuz gekennzeichnet, wobei jede Nachricht per Net-Broadcast versendet wird, d.h. jede der anderen Anlagen 2.1 bis 2.7 empfängt die so versendete Nachricht. Übermittlungszeiten zwischen den einzelnen Anlagen 2.1 bis 2.7 sind in der Darstellung nicht berücksichtigt.

Um eine ordnungsgemäße Kommunikation im Kommunikationsnetz 10 sicherzustellen, ist es erforderlich, dass die von einer der Anlagen 2.1 bis 2.7 empfangenen Nachrichten in einer vorgegebenen Verarbeitungszeit 11 eine maximale Anzahl verarbeitbarer Nachrichten nicht überschreitet. Jede Anlage 2.1 bis 2.7 weist einen Empfangspuffer auf, in dem eingehende Nachrichten zwischengespeichert werden, bevor sie verarbeitet werden. Der Empfangspuffer ist in seiner Größe begrenzt und kann nur innerhalb der vorgegebenen Verarbeitungszeit 11 vollständig abgearbeitet werden, d.h. alle Nachrichten im Empfangspuffer können in dieser Zeit verarbeit werden. Damit immer alle Nachrichten von allen Anlagen 2.1 bis 2.7 verarbeitet werden können, dürfen in einem Zeitraum entsprechend der Verarbeitungszeit 11 nicht mehr Nachrichten eingehen als verarbeitet werden können.

Im dargestellten Beispiel werden in der Verarbeitungszeit 11 maximal vier Nachrichten über das Kommunikationsnetz 10 verschickt. Die einzelnen Anlagen 2.1 bis 2.7 müssen also so ausgelegt sein, in der Verarbeitungszeit 11 wenigstens vier Nachrichten verarbeiten zu können. Tatsächlich sind die Anlagen 2.1 und 2.7 im Ausführungsbeispiel in der Lage, acht Nachrichten im Verarbeitungszeitraum 11 zu verarbeiten. Dadurch ist sichergestellt, dass praktisch immer alle Nachrichten verarbeitet werden können, auch wenn es zur kurzzeitigen Verzögerung in der Verarbeitung von Nachrichten bei einzelnen Anlagen 2.1 bis 2.7 kommen sollte. Weiterhin ist es so möglich, dass eine übergeordnete Anlage, bspw. der Parkmaster 26 bzw. Anlage 2.6, zu jedem Zeitpunkt Nachrichten senden kann, ohne dass die Eingangspuffer bei den anderen Anlagen 2.1 bis 2.5, 2.7 überlaufen und Nachrichten nicht verarbeitet werden können.

Zum Zeitpunkt t0 sendet die Anlage 2 mit der kleinsten Anlagennummer, hier die Anlage 2.1, eine Nachricht, die von allen übrigen Anlagen 2.2 bis 2.7 empfangen wird. Bei dieser Nachricht handelt es sich um eine standardmäßige Nachricht mit Nutzdaten, nicht um eine spezielle Synchronisationsnachricht, wie sie bspw. im Stand der Technik erforderlich ist. Die Anlagen 2.2 bis 2.7 bestimmen ausgehend von dem Zeitpunkt des Eingangs dieser Nachricht den Zeitpunkt, an dem sie eine Nachricht senden dürfen. Dabei ist der Zeitpunkt abhängig von der Anlagennummer der jeweiligen Anlage 2.2 bis 2.7. Die zeitlichen Abstände zwischen den einzelnen über das Kommunikationsnetz 10 gesendeten Nachrichten ist dabei so gewählt, dass während einer Zeitspanne entsprechend der Verarbeitungszeit 11 standardmäßig immer nur vier Nachrichten gesendet werden. Zusätzliche Nachrichten von übergeordneten Anlagen oder Nachrichten von Anlagen, die nicht synchronisiert sind, können die Anzahl der Nachrichten während einer Zeitspanne entsprechend der Verarbeitungszeit 11 erhöhen. Aufgrund der vorgesehenen Größe des Eingangspuffers ist dies jedoch grundsätzlich nicht kritisch.

Der Zeitpunkt des Sendens einer Nachricht der Anlage 2 mit der höchsten Anlagennummer, hier Anlage 2.7, zuzüglich einem Zeitpuffer 13 ergibt ein Sendeintervall 12. Ist nach dem Senden einer Nachricht der Anlage 2.1 mit der kleinsten Anlagennummer ein Sendeintervall vergangen, wird am Zeitpunkt t1 erneut eine Nachricht versendet, die wiederum von den anderen Anlagen 2.2 bis 2.7 zur Synchronisation verwendet wird, um die Zeitpunkte zum Senden von Nachrichten bei den Anlagen 2.2 bis 2.7 zu bestimmen. Es wird auf die obigen Ausführungen verwiesen.

Im dargestellten Beispiel fällt die Anlage 2.1 nach dem Senden der Nachricht zum Zeitpunkt t1 aus. Dementsprechend wird nach einem weiteren Sendeintervall ausgehend von Zeitpunkt t1 zum Zeitpunkt t2 keine Nachricht von der Anlage 2.1 mit der kleinsten Anlagennummer versendet und von den anderen Anlagen 2.2 bis 2.7 empfangen.

Es ist vorgesehen, dass die anderen Anlagen 2.2 bis 2.7 bei Ausbleiben einer Nachricht von der Anlage 2.1 mit der kleinsten Anlagennummer selbstständig Nachrichten nach Ablauf eines Sendeintervalls seit dem letzten Senden einer Nachricht von derselben Anlage 2.2 bis 2.7 senden. So kann auch bei Ausfall der Anlage 2.1 die Kommunikation im Kommunikationsnetz 10 sichergestellt werden.

Wird auch zum Zeitpunkt t3, d.h. zwei Sendeintervalle seit dem letzten Senden einer Nachricht von der Anlage 2.1 mit der kleinsten Anlagennummer zum Zeitpunkt t1, von dieser Anlage 2.1 keine Nachricht gesendet, wird die Anlage 2 mit der nächst höheren Anlagennummer, hier Anlage 2.2, die Anlage 2 mit der kleinsten Anlagennummer. Die übrigen Anlagen 2.3 bis 2.7 synchronisieren sich dann entsprechend an dem Empfang von Nachrichten der Anlage 2.2. Die Anlage 2.2 muss nicht besonders ausgebildet sein, um die Anlage mit der kleinsten Anlagennummer zu werden und somit an die erste Position der Reihenfolge der Anlagen aufzurücken. Vielmehr wird die Anlage 2.2 ohne deren Zutun nach den beschrieben zwei Sendeintervallen 12 vom Zeitpunkt t1 bis zum Zeitpunkt t3 von den übrigen Anlagen 2.3 bis 2.7 als Anlage mit der kleinsten Anlagennummer angesehen. Die Anlagen 2.3 bis 2.7 synchronisieren sich dann anhand der von der Anlage 2.2 empfangenen Nachrichten. Die Anlage 2.2 sendet weiterhin Nachrichten nachdem jeweils ein Sendeintervall 12 seit dem letzten Senden einer Nachricht vergangen ist.

In Figur 3 ist schematisch eine erfindungsgemäße Anlage 2 dargestellt. Dabei ist lediglich der Teil der Anlage 2 dargestellt, der für die Kommunikation mit dem Kommunikationsnetz 10 erforderlich ist. Alle übrigen mechanischen, elektrischen und steuerungstechnischen Komponenten der Anlage 2 sind in Block 30 zusammengefasst. Handelt es sich bei der Anlage 2 bspw. um eine Windenergieanlage, gehören zu diesen Komponenten 30 bspw. Rotor, Generator, Pitchverstellantrieb, Umrichter, Steuerungseinrichtungen usw.

Die Anlage 2 weist weiterhin noch ein Empfangsmodul 31 und ein Sendemodul 32 auf. Die beiden Module 31, 32 sind mit dem Kommunikationsnetz 10 verbunden, wobei das Empfangsmodul 31 zum Empfang von Nachrichten aus dem Kommunikationsnetz 10 ausgebildet ist, während das Sendemodul 32 Nachrichten über das Kommunikationsnetz 10 versenden kann.

Das Empfangsmodul 31 weist einen Eingangspuffer 32 auf, in dem Nachrichten aus dem Kommunikationsnetz 10 zwischengespeichert werden, bevor sie von dem Empfangsmodul 31 verarbeitet werden können. Der Eingangspuffer 32 kann eine vorgegebene Anzahl an Nachrichten zwischenspeichern, wobei das Empfangsmodul 31 diese vorgegebene Anzahl an Nachrichten innerhalb einer vorgegebenen Verarbeitungszeit 11 verarbeiten kann. Die von dem Empfangsmodul 31 empfangenen Nachrichten werden an die übrigen Komponenten 30 der Anlage 2 weitergegeben, wo sie bspw. bei der Steuerung der Anlage 2 berücksichtigt werden können.

Das Sendemodul 32 kann ebenfalls einen Puffer 34 für zu sendende Nachrichten aufweisen, wobei das Sendemodul 32 nur dann eine Nachricht sendet, wenn es einen entsprechenden Befehl erhält. Die Nachrichten, die versendet werden sollen und im Puffer 34 zwischengespeichert werden können, stammen von den übrigen Komponenten 30 der Anlage 2 und enthalten bspw. Messergebnisse oder Befehle an andere Anlagen 2 im Kommunikationsnetz 10.

Weiterhin ist ein Synchronisationsmodul 35 vorgesehen, welches mit dem Empfangsmodul 31 und dem Sendemodul 32 verbunden ist. Das Synchronisationsmodul 35 ist in der Lage, aus jeder empfangenen Nachricht die Anlagennummern der Anlage zu ermitteln, welche die entsprechende Nachricht versendet hat. Weiterhin ist das Synchronisationsmodul 35 dazu ausgebildet, dem Sendemodul 32 ein Signal zum Senden einer Nachricht zu geben.

Das Synchronisationsmodul 35 ist dazu ausgebildet, eine Kommunikation wie anhand der Figuren 1 und 2 erläutert, zu gewährleisten. Dazu weist das Synchronisationsmodul 35 ein Speicherelement 36 auf, in dem die Anlagennummer der Anlage 2, der das Synchronisationsmodul 35 zugeordnet ist, sowie die Anlagennummer der Anlage 2 mit der kleinsten Anlagennummer abgelegt ist.

Ein mögliches Verhalten des Synchronisationsmoduls 35 wird nun anhand von Figur 4 näher erläutert.

In einem ersten Schritt 101 wird überprüft, ob das Synchronisationsmodul 35 der Anlage 2 mit der kleinsten Anlagennummer zugeordnet ist. Dazu wird auf die im Speicherelement 36 ablegten Anlagennummern zurückgegriffen.

Wird festgestellt, dass das Synchronisationsmodul 35 tatsächlich der Anlage 2 mit der kleinsten Anlagennummer zugeordnet ist, wird ein vollständiges Sendeintervall abgewartet (Schritt 102). Anschließend wird das Sendemodul 32 zum Senden einer Nachricht aufgefordert (Schritt 103).

Ist das Synchronisationsmodul 35 nicht der Anlage 2 mit der kleinsten Anlagennummer zugeordnet, wird in Schritt 104 festgestellt, ob das Synchronisationsmodul 35 bereits vorher das Sendemodul 32 zum Senden einer Nachricht aufgefordert hat.

Ist dies nicht der Fall, wird überprüft, ob das Empfangsmodul 31 eine Nachricht von der Anlage 2 mit der kleinsten Anlagennummer empfangen hat (Schritt 105). Ist dies nicht der Fall, wird auf den Empfang einer entsprechenden Nachricht gewartet (Schritt 106).

Sobald eine Nachricht von der Anlage 2 mit der kleinsten Anlagennummer erhalten wurde, kann der Zeitpunkt, an dem die Anlage 2, der das Synchronisationsmodul 35 zugeordnet ist, eine Nachricht senden darf, anhand der Anlagennummer bestimmt werden. In Schritt 107 wird überprüft, ob dieser Zeitpunkt erreicht ist. Ist dies noch nicht der Fall, wird gewartet (Schritt 108). Sobald der Zeitpunkt erreicht ist, wird das Sendemodul 32 angewiesen, eine Nachricht zu senden (Schritt 109). Dabei kann die Nachricht aus dem Nachrichtenpuffer 34 stammen und Informationen von den anderen Komponenten 30 der Anlage 2 enthalten. Sollte der Nachrichtenpuffer 34 leer sein, kann eine Nachricht ohne besonderen Informationsgehalt gesendet werden.

Wird bei der Prüfung in Schritt 104 festgestellt, dass das Synchronisationsmodul 35 das Sendemodul 32 bereits einmal angewiesen hat, eine Nachricht zu senden, wird in Schritt 110 überprüft, ob seit der letzten Anweisung an das Sendemodul 32 zum Senden einer Nachricht ein vollständiges Sendeintervall vergangen ist. Sofern dies der Fall ist, wird das Sendemodul 32 angewiesen, eine Nachricht zu senden (Schritt 111).

Ist die Zeit eines vollständigen Sendeintervalls noch nicht verstrichen, wird eine den Schritten 105 bis 109 entsprechende Abfolge von Schritten 105' bis 109' abgearbeitet. Es wird diesbezüglich auf die obigen Ausführungen verwiesen.

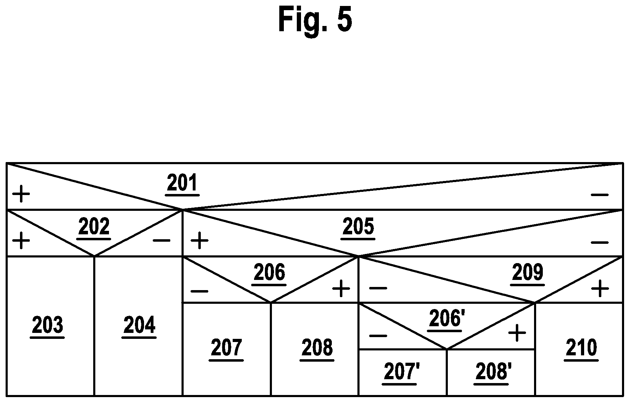

In Figur 5 ist ein alternatives Verhalten der Synchronisationsmoduls 35 schematisch dargestellt.

In einem ersten Schritt 201 wird überprüft, ob das Synchronisationsmodul 35 der Anlage 2 mit der kleinsten Anlagennummer zugeordnet ist. Dazu wird auf die im Speicherelement 36 ablegten Anlagennummern zurückgegriffen.

Wird festgestellt, dass das Synchronisationsmodul 35 tatsächlich der Anlage 2 mit der kleinsten Anlagennummer zugeordnet ist, wird in Schritt 202 überprüft, ob diese Anlage 2 bereits im vorangegangenen Zyklus die Anlage 2 mit der kleinsten Anlagennummer war. Ist dies der Fall, wird ein vollständiges Sendeintervall abgewartet und nach Ablauf des Sendeintervalls das Sendemodul 32 zum Senden einer Nachricht aufgefordert (Schritt 203).

War die Anlage im vorangegangenen Zyklus (noch) nicht die Anlage 2 mit der kleinsten Anlagennummer, deutet dies darauf hin, dass die ursprüngliche Anlage 2 mit der kleinsten Anlagennummer defekt ist oder zumindest keine Nachrichten sendet und die Anlage 2 mit der nächst höheren Anlagennummer die Anlage 2 mit der kleinsten Anlagennummer werden muss. In diesem Fall weist die Anlage 2 mit der nunmehr kleinsten Anlagennummer ihr Sendemodul 32 zum Senden einer Nachricht an (Schritt 204).

Ist das Synchronisationsmodul 25 nicht der Anlage 2 mit der kleinsten Anlagennummer zugeordnet, wird in Schritt 205 festgestellt ob das Empfangmodul 31 seit dem letzten Senden einer Nachricht über das Sendemodul 32 eine Nachricht von der Anlage 2 mit der kleinsten Anlagennummer erhalten hat (Schritt 205).

Ist dies der Fall, kann der Zeitpunkt, an dem die Anlage 2, der das Synchronisationsmodul 35 zugeordnet ist, eine Nachricht senden darf, anhand der Anlagennummer bestimmt werden. In Schritt 206 wird überprüft, ob dieser Zeitpunkt erreicht ist. Ist dies noch nicht der Fall, wird gewartet (Schritt 207). Sobald der Zeitpunkt erreicht ist, wird das Sendemodul 32 angewiesen, eine Nachricht zu senden (Schritt 208). Dabei kann die Nachricht aus dem Nachrichtenpuffer 34 stammen und Informationen von den anderen Komponenten 30 der Anlage 2 enthalten.

Wird bei der Prüfung in Schritt 205 festgestellt, dass keine Nachricht von der Anlage 2 mit der kleinsten Anlagennummer erhalten wurde, wird in Schritt 209 überprüft, ob seit der letzten Anweisung an das Sendemodul 32 zum Senden einer Nachricht ein vollständiges Sendeintervall vergangen ist. Sofern dies der Fall ist, wird das Sendemodul 32 angewiesen, eine Nachricht zu senden (Schritt 210).

Ist die Zeit eines vollständigen Sendeintervalls noch nicht verstrichen, wird eine den Schritten 206 bis 208 entsprechende Abfolge von Schritten 206' bis 208' abgearbeitet. Es wird diesbezüglich auf die obigen Ausführungen verwiesen.

## Patentansprüche

1. Verfahren zur Kommunikation zwischen in einer Reihenfolge gemäß einem sortierfähigen Merkmal geordneten Anlagen (2) in einem Windpark (1), bei dem von einer Anlage (2) in Form einer Nachricht gesendete Informationen von allen anderen Anlagen (2) in dem Windpark (1) empfangen werden, wobei ein zyklisch wiederkehrendes, zeitliches Sendeintervall (12) eingerichtet ist und jeder Anlage (2) in Abhängigkeit von ihrer Position in der Reihenfolge ein Zeitpunkt in dem Sendeintervall (12) zugeordnet ist, zu dem sie eine Nachricht senden darf, wobei ausgehend von einer ersten Position in der Reihenfolge Zeitpunkte von Beginn des Sendeintervalls (12) an, entsprechend der Position in der Reihenfolge geordnet sind und wobei der Beginn des Sendeintervalls bei allen Anlagen (2) anhand einer von der Anlage (2) an der ersten Position in der Reihenfolge ausgesendeten Nachricht synchronisiert wird und wobei jede Anlage anhand aller von den anderen Anlagen erhaltenen Nachrichten selbstständig die Anlage an der ersten Position der Reihenfolge bestimmt und jede Anlage (2) überprüft, ob sie selbst die Anlage (2) an der ersten Position in der Reihenfolge ist, und, wenn ja, nach Ablauf eines Sendeintervalls (12) eine Nachricht versendet.

2. Verfahren nach Anspruch 1,
**dadurch gekennzeichnet, dass**
eine Anlage (2) eine Nachricht versendet, wenn der gemäß Position in der Reihenfolge zugehörige Zeitpunkt im Sendeintervall (12) erreicht ist.

3. Verfahren nach Anspruch 1 oder 2,
**dadurch gekennzeichnet, dass**

nach zwei Sendeintervallen (12), in denen Nachrichten von der Anlange (2) an der ersten Position in der Reihenfolge ausbleiben, die Anlage (2) an der nächst höheren Position in der Reihenfolge die Anlage (2) an der ersten Position in der Reihenfolge wird.

4. Verfahren nach einem der vorhergehenden Ansprüche,
   **dadurch gekennzeichnet, dass**
   eine Anlage (2) eine Nachricht unabhängig von dem Erhalt einer Nachricht der Anlage an der ersten Position in der Reihenfolge nach Ablauf der Zeit für ein gesamtes Sendeintervall (12) seit der letzten von dieser Anlage gesendeten Nachricht sendet.

5. Verfahren nach einem der vorhergehenden Ansprüche,
   **dadurch gekennzeichnet, dass**
   die Abstände zwischen den Zeitpunkten, an denen Anlagen Nachrichten senden dürfen, derart gewählt wird, dass ein Überlauf der Empfangspuffer für Nachrichten an den Anlagen (2) vermieden wird, indem die Anzahl der regelmäßig in einem Zeitintervall versendeten Nachrichten geringer ist als maximal möglich.

6. Verfahren nach einem der vorhergehenden Ansprüche,
   **dadurch gekennzeichnet, dass**
   eine Verarbeitungszeit vorgegeben ist, die die vollständige Verarbeitung der vorgegebenen maximalen Anzahl der im Eingangspuffer für Nachrichten einer Anlage befindlichen Nachrichten ermöglicht, eine Anzahl der in einem Verarbeitungszeitraum regelmäßig erlaubter Nachrichteneingänge festgelegt ist und der Zeitpunkt für das Senden einer Nachricht durch eine Anlage an einer gegebenen Position in der Reihenfolge sich bestimmt nach

$$Zeitpunkt = \frac{Verarbeitungszeit}{Anzahl\ der\ erlaubten\ Nachrichten} \times Position\ in\ der Reihenfolge$$

7. Anlage (2) umfassend eine Kommunikationseinheit mit einem Empfangsmodul (31), einem Sendemodul (32) und einem Synchronisationsmodul (35), wobei das Synchronisationsmodul (35) dazu ausgebildet ist, die Position in der Reihenfolge aus den von dem Empfangsmodul (31) empfangenen Nachrichten anderer Anlagen auszulesen und anhand einer abgespeicherten Position in der Reihenfolge zu ermitteln, ob die Anlage (2) die Anlage an der ersten Position in der Reihenfolge ist, und, wenn ja, nach Ablauf eines Sendeintervalls das Sendemodul (32) anzuweisen, eine Nachricht zu versenden, wenn nein, den Empfang einer Nachricht von der Anlage an der ersten Position in der Reihenfolge abzuwarten, ausgehend vom Zeitpunkt des Empfangs einer Nachricht von der Anlage an der ersten Position in der Reihenfolge einen Zeitpunkt gemäß der eingespeicherten Position in der Reihenfolge zu bestimmen und zu dem Zeitpunkt das Sendemodul (32) anzuweisen, eine Nachricht zu versenden und wobei das Synchronisationsmodul (35) dazu ausgebildet ist, anhand aller von den anderen Anlagen erhaltenen Nachrichten selbstständig die Anlage an der ersten Position der Reihenfolge zu bestimmen.

8. Anlage nach Anspruch 7,
   **dadurch gekennzeichnet, dass**
   die Anlage (2) dazu ausgebildet ist, nach Versand der ersten Nachricht unabhängig von dem Erhalt eine Nachricht der Anlage an der ersten Position in der Reihenfolge nach Ablauf einer Zeitspanne entsprechend einem Sendeintervall eine zweite Nachricht zu senden.

**Claims**

1. Method for communication between installations (2) on a wind farm (1) that are organized in an order according to a sortable feature, in which one installation (2) receives information sent in the form of a message from all the other installations (2) on the wind farm (1), wherein a cyclically recurring, temporal transmission interval (12) is set up and each installation (2) has, on the basis of its position in the order, an associated instant in the transmission interval (12) at which it is permitted to send a message, wherein, starting from a first position in the order, instants are organized from the beginning of the transmission interval (12) onward, in line with the position in the order, and wherein the beginning of the transmission interval is synchronized for all the installations (2) by using a message transmitted from the installation (2) at the first position in the order and wherein each installation uses all the messages obtained from the other installations to independently determine the installation at the first position in the order, and each installation (2) checks whether it itself is the installation (2) at the first position in the order and, if so, sends a message after a transmission interval (12) has elapsed.

2. Method according to Claim 1,
   **characterized in that**
   an installation (2) sends a message when the associated instant in the transmission interval (12), in accordance with the position in the order, is reached.

3. Method according to Claim 1 or 2,
   **characterized in that**
   after two transmission intervals (12) in which messages from the installation (2) at the first position in the order are absent, the installation (2) at the next highest position in the order becomes the installation (2) at the first position in the order.

4. Method according to one of the preceding claims,
   **characterized in that**
   an installation (2) sends a message, regardless of the receipt of a message from the installation at the first position in the order, when the time for an entire transmission interval (12) since the last message sent by this installation has elapsed.

5. Method according to one of the preceding claims,
   **characterized in that**
   the gap between the instants at which installations are permitted to send messages is chosen such that overflow of the reception buffers for messages at the installations (2) is avoided by virtue of the number of messages regularly sent in a time interval being lower than the maximum possible.

6. Method according to one of the preceding claims,
   **characterized in that**
   a processing time is prescribed that allows complete processing of the prescribed maximum number of messages situated in the input buffer for messages from an installation, a number of message receipts that is regularly allowed in a processing period is stipulated and the instant for the sending of a message by an installation at a given position in the order is determined as follows:

$$instant = \frac{processing\ time}{number\ of\ permitted\ messages} \times position\ in\ the\ order$$

7. Installation (2) comprising a communication unit having a reception module (31), a transmission module (52) and a synchronization module (35), wherein the synchronization module (35) is designed to read the position in the order from the messages received by the reception module (31) from other installations and to use a stored position in the order to ascertain whether the installation (2) is the installation at the first position in the order, and, if so, when a transmission interval has elapsed, to instruct the transmission module (32) to send a message, and, if not, to await the reception of a message from the installation at the first position in the order, to determine an instant, starting from the instant of reception of a message from the installation at the first position in the order, in accordance with the stored position in the order and, at the instant, to instruct the transmission module (32) to send a message, and wherein the synchronization module (35) is designed to use all the messages obtained from the other installations to independently determine the installation at the first positon in the order.

8. Installation according to Claim 7,
   **characterized in that**
   the installation (2) is designed to send a second message after the first message has been sent, regardless of the receipt of a message from the installation at the first position in the order, when a period of time corresponding to a transmission interval has elapsed.

**Revendications**

1. Procédé de communication entre des installations (2) d'un parc éolien (1) organisées en une série, conformément à un critère de classement, dans lequel des informations transmises par la totalité d'autres installations (2) du parc éolien (1) sont reçues par une installation (2) sous la forme d'un message, dans lequel un intervalle de transmission (12) temporaire, cycliquement récurrent, est établi, et un point dans le temps, dans l'intervalle de transmission (12), auquel l'installation doit transmettre un message, est associé à chaque installation (2), en fonction de sa position dans la série, dans lequel des points dans le temps sont établis à partir du début de l'intervalle de transmission (12) en partant d'une première position dans la série, d'une manière qui correspond à la position dans la série, et dans lequel le début de l'intervalle de transmission est synchronisé pour toutes les installations (2) sur la base d'un message transmis par l'installation (2) à la première position dans la série, et dans lequel chaque installation détermine automatiquement l'installation se trouvant à la première positon de la série sur la base de tous les messages obtenus en provenance des autres installations et vérifie chaque installation (2) pour déterminer si l'installation (2) est elle-même à la première position dans la série et, si cela est le cas, transmet un message après écoulement d'un intervalle de transmission (12).

2.  Procédé selon la revendication 1,
    **caractérisé en ce qu'**une installation (2) transmet un message lorsque le point dans le temps correspondant à la position dans la série est atteint au cours de l'intervalle de transmission (12).

3.  Procédé selon la revendication 1 ou 2,
    **caractérisé en ce que**, après deux intervalles de transmission (12) au cours desquels des messages provenant de l'installation (2) subsistent à la première position dans la série, l'installation (2) se trouvant à la position la plus haute suivante dans la série devient l'installation (2) se trouvant à la première position dans la série.

4.  Procédé selon l'une des revendications précédentes,
    **caractérisé en ce qu'**une installation (2) transmet un message indépendamment de l'obtention d'un message de l'installation se trouvant à la première position dans la série après écoulement du temps correspondant à la totalité d'un intervalle de transmission (12) depuis le dernier message transmis par ladite installation.

5.  Procédé selon l'une des revendications précédentes,
    **caractérisé en ce que** les distances entre les points dans le temps auxquels des installations doivent transmettre des messages, sont sélectionnées de manière à ce qu'un débordement du tampon de réception de messages soit évité au niveau des installations (2) en réduisant le plus possible le nombre des messages régulièrement transmis au cours d'un intervalle de temps.

6.  Procédé selon l'une des revendications précédentes,
    **caractérisé en ce qu'**un temps de traitement permettant de traiter entièrement le nombre maximal prédéfini des messages se trouvant dans le tampon d'entrée de messages d'une installation est prédéfini, **en ce qu'**un nombre des entrées de messages autorisés régulièrement au cours d'un intervalle de temps de traitement est établi et **en ce que** le point dans le temps où un message est transmis par une installation à une position donnée dans la série est déterminé conformément à :

$$Point\ dans\ le\ temps = \frac{Temps\ de\ traitement}{Nombre\ des\ messages\ autorisés} \times Position\ dans\ la\ série.$$

7.  Installation (2) comprenant une unité de communication munie d'un module de réception (31), d'un module de transmission (32) et d'un module de synchronisation (35), dans lequel le module de synchronisation (35) est conçu pour lire la position dans la série à partir des messages d'autres installations, reçus par le module de réception (31), et pour déterminer, sur la base d'une position mémorisée dans la série, si l'installation (2) est l'installation se trouvant à la première position dans la série et, si cela est le cas, après écoulement d'un intervalle de transmission, pour ordonner au module de transmission (32) de transmettre un message, si cela n'est pas le cas, pour attendre la réception d'un message en provenance de l'installation se trouvant à la première position dans la série, pour déterminer un point dans le temps conformément à la position mémorisée dans la série à partir du point dans le temps de la réception d'un message en provenance de l'installation se trouvant à la première position dans la série, et pour ordonner au module de transmission (32) de transmettre un message audit point dans le temps, et dans lequel le module de synchronisation (35) est conçu pour déterminer automatiquement l'installation se trouvant à la première position dans la série sur la base de tous les messages obtenus en provenance des autres installations.

8.  Installation selon la revendication 7,
    **caractérisée en ce que** l'installation (2) est conçue pour transmettre un second message après la transmission du premier message indépendamment de l'obtention d'un message de l'installation se trouvant à la première position dans la série après écoulement d'une période de temps correspondant à un intervalle de transmission.

Fig. 1

EP 2 832 046 B1

# Fig. 2

# Fig. 3

# Fig. 4

# Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2393248 A1
- DE 102005020733 A1

- US 20080198868 A